# EUROPEAN PATENT APPLICATION

(11) **EP 4 589 272 A1**
(43) Date of publication of application: **23.07.2025**
(21) Application number: 25152992.1
(22) Date of filing: 21.01.2025
(51) Int. Cl.: G01K 1/143, G01K 1/16

(54) **TEMPERATURE SENSOR FOR A HIGH-VOLTAGE CONDUCTOR AND METHOD OF MANUFACTURING SUCH A TEMPERATURE SENSOR**

(30) Priority: 22.01.2024 DE 102024101700
(71) Applicant: TE Connectivity Solutions GmbH, 8200 Schaffhausen (CH)
(72) Inventor: WITTROCK, Frank, Schaffhausen (CH); BENICHOU, Jonathan, Schaffhausen (CH); STAB, Robert, Schaffhausen (CH); BEESE, Philipp, Schaffhausen (CH)
(74) Representative: Grünecker Patent- und Rechtsanwälte PartG mbB

(57) **Abstract**

The present invention relates to a temperature sensor (10) for a high-voltage conductor. The temperature sensor (10) comprises a sensor housing for forming a chamber, the sensor housing having a base plate (100) with a measuring window (110) for attaching to the high-voltage conductor and a lid (200) for covering the chamber. Further, the temperature sensor (10) comprises a temperature sensor element (410) for measuring the temperature of the high-voltage conductor and for outputting an electrical temperature signal to a low-voltage network, wherein the temperature sensor element (410) is arranged in the chamber. Further, the temperature sensor (10) comprises a preformed elastomer mat (300) enclosed between the base plate (100) and the lid (200) in the chamber, wherein the elastomer mat (300) has an insulation portion (310) extending around the measuring window (110) to electrically insulate the temperature sensor from the high-voltage conductor, and wherein the elastomer mat (300) further comprises a heat exchange portion (330), surrounded by the insulation portion (310), the heat exchange portion (330) extending through the measuring window (110) to the high-voltage conductor in a heat transfer direction (W) to conduct heat energy in the heat transfer direction (W) between the high-voltage conductor and the temperature sensor element (410) adjacent to the heat exchange portion.

## Description

The invention relates to a temperature sensor for a high-voltage conductor and a manufacturing method for such a temperature sensor.

High-voltage conductors are used in high-voltage applications. High-voltage applications refer to the use of electrical voltage in the high-voltage range, typically above several hundred volts. These applications span various industries and technologies. In the automotive sector, for example, high-voltage technology refers to the use of high-voltage batteries in electric and hybrid vehicles. The high-voltage is typically 400 V to 600 V or even more than 600 V. These high-voltage batteries are crucial for the performance and range of the vehicles.

In the electronics industry, high-voltage applications play a role in the power supply of electrical devices, particularly in high-voltage power supply units and transformers. High-voltage applications are also used in energy technology to transport electrical energy over long distances and distribute it at different voltage levels.

The safe handling of high-voltage is crucial as high-voltage applications can be potentially dangerous. The development of protective measures, insulation materials and safety standards is therefore of great importance in order to prevent accidents and ensure the efficiency and reliability of high-voltage applications.

Temperature sensors can be used to monitor the temperature of high-voltage conductors. Temperature sensors for high-voltage applications are specially developed sensors that are used in environments with high electrical voltages. Normally, temperature sensors provide signals in the low voltage range. For example, temperature sensors in vehicles are connected to the vehicle electrical system, which has a supply voltage of 12 V in passenger cars, for example.

The above circumstances require that temperature sensors for high-voltage conductors are designed to take into account the increased risk of electrical discharges in high-voltage applications. In addition, special material selection may be required as these sensors must not only be electrically insulating but also heat resistant to withstand the extreme conditions that can occur in high-voltage applications. Furthermore, in high-voltage applications, accurate temperature measurement can be critical for safety and reliable operation. These sensors must therefore have high accuracy and stability to ensure accurate measurements over a wide temperature range. Due to the often demanding operating conditions, temperature sensors for high-voltage applications must be long-term stable and reliable to ensure consistent performance over a long period of time.

For all these reasons, temperature sensors for high-voltage conductors are generally very expensive. A primary goal is therefore also to reduce manufacturing costs.

In line with a market trend, high-voltage connectors in particular are becoming much more compact. As a result, thermal monitoring of the high-voltage conductors in the high-voltage connector is becoming increasingly important.

In particular, double or reinforced insulation can be achieved, for example, by a hermetically insulated sensor, which is realized, for example, by potting or a double-walled shrink tube. Such double or reinforced insulation can protect against flashovers. However, such insulation makes the sensor expensive and slow.

Alternatively, the sensor can contain a ceramic or metallic sensor plate to improve the response time. However, this increases the costs.

The invention is based on the object of creating a temperature sensor that fulfills at least one of the above-mentioned requirements better, more cost-effectively or more simply.

The above tasks are solved by the subject matter of the independent patent claims. Advantageous further embodiments are the subject of the dependent patent claims.

In general, an insulating sensor housing in conjunction with a preformed one-piece insulating elastomer mat, which is accommodated therein and carries a temperature sensor element, solves the above objects. In particular, the preformed insulating elastomer mat has a heat exchange portion surrounded by an insulation portion.

The preformed insulating elastomer mat therefore fulfills two functions. The insulation portion contributes to increased insulation. In addition, the heat exchange portion enables a short response time of the sensor. In combination with the two-part design of the sensor housing, cost-effective linear integration of the elastomer mat is possible.

In other words, the object is solved by using two insulating plastic half-shells that form the housing for a molded elastomer mat that holds the sensor. The molded elastomer mat transfers the thermal energy to the sensor element. The elastomer mat enables tolerance compensation and secure contact between the sensor element and the current carrying metal part whose temperature is to be monitored. This ensures good transfer of thermal energy over the entire service life of the product.

This configuration enables an assembled sensor that does not require potting or heat shrink tubing, so that the sensor can be manufactured in large quantities at low cost, e.g. in line production. Double or reinforced insulation is achieved by using a molded elastomer mat around the sensor. This results in a sensor with lower costs compared to available sensor solutions.

Ribs can be provided to extend the creepage and clearance distances. In particular, a creepage distance of 10.6 mm can be realized in this way. This allows the temperature sensor to be manufactured in a particularly compact way.

By using an elastomer mat with high thermal conductivity, the heat is quickly transferred from the contact of the high-voltage conductor to the temperature sensor element. The heat can be transferred from the current-carrying metal part to the temperature sensor element without an air gap, as the heat transfer part of the elastomer mat compensates for tolerances and geometric deviations.

When assembled, the lower and upper housing shells form a protected product. The sensor can also be fitted with a strain relief for the cables.

In particular, the molded elastomer can be a silicone with increased thermal conductivity, while the plastic half-shells have low thermal conductivity. This increases the performance and, in particular, enables a fast response time and high accuracy of the temperature measurement.

According to a first example, a temperature sensor for a high-voltage conductor comprises a sensor housing for forming a chamber, the sensor housing having a base plate with a measuring window for attachment to the high-voltage conductor and a lid for covering the chamber.

The sensor housing is preferably made of resistant materials. In particular, the sensor housing is preferably made of an electrically insulating material.

An enclosure, comprising or consisting of a base plate and a lid that are connected to each other, makes it possible to protect electronic or mechanical components from external influences. The base plate forms the base on which the components are placed, while the lid closes the housing and provides wide-ranging protection. The housing does not have to completely enclose the chamber, but has openings such as the measuring window and a connection opening for connecting the temperature sensor element to a supply network.

In addition, the connection between the base plate and lid provides mechanical stability, which helps to protect the components inside, such as the temperature sensor element and its contacts, from mechanical stress.

The separation of the base plate and the lid enables easy assembly of the internal components. In particular, linear production is possible.

The base plate is mounted on the high-voltage conductor and is therefore in contact with the high-voltage conductor. Thermal energy can be conducted into the chamber through the measuring window.

According to the first example, the temperature sensor comprises a temperature sensor element for measuring the temperature of the high-voltage conductor and for outputting an electrical temperature signal to a low-voltage network, wherein the temperature sensor element is arranged in the chamber.

The temperature sensor element measures the temperature and converts it into an electrical signal. It can comprise or consist of different types of sensors, such as thermocouples, resistance thermometers (RTDs), or thermistors.

To output the electrical temperature signal, the temperature sensor element is connected to a low-voltage network via connection terminals, usually two or more. For example, an RTD is a temperature sensor whose electrical resistance changes with the temperature. The change in resistance is measured and converted into a temperature signal. The electrical connections can vary depending on the sensor and application.

In the first example, the temperature sensor also comprises a preformed elastomer mat. A preformed elastomer mat is a sheet or mat made of elastomer materials that is already molded into a specific shape and/or with specific properties. Elastomers are polymeric materials with rubber-like properties that can deform when stretched and then return to their original shape. Rubber is an example of an elastomer material. A preformed elastomer mat makes it particularly easy to install the temperature sensor, as there is no need for injection molding during final assembly.

Furthermore, the elastomer mat is enclosed between the base plate and the lid in the chamber. In other words, the elastomer mat, which comprises or consists of one piece, is held, e.g. clamped, within a boundary of the sensor housing. Such a stacked construction contributes to the ease of assembly of the temperature sensor, as line production can be used and only one part needs to be positioned.

Furthermore, the elastomer mat has an insulation portion extending around the measuring window in order to electrically insulate the temperature sensor from the high-voltage conductor. The insulation portion extends around the measuring window on the base plate, thus increasing the creepage and clearance distance between the high-voltage conductor and the temperature sensor. In other words, the distance between an edge of the measuring window open to the high-voltage conductor and the temperature sensor element arranged in the chamber is increased. As described below, the temperature sensor element is preferably arranged in the elastomer mat, but can also be arranged on a side of the elastomer mat facing the lid.

The terms creepage distance and clearance distance are used in electrical engineering, particularly in connection with insulation coordination and safety standards.

The creepage distance is the longest electrically conductive path across the surface of an insulator between two conductive parts. In other words, it is the distance that an arc can travel along a surface. Increasing it ensures that if foreign material, such as dirt or condensation, enters the housing, there is still enough insulation on the surface of an insulator to protect the conductors from short circuiting.

The clearance distance is the shortest air path between two conductive parts or electrical components that are separated by insulating materials or air. This term is particularly important when assessing the insulation strength between different parts in electrical circuits or devices. An increase in the clearance distance means that the air resistance or insulating material between the parts provides sufficient protection to prevent a breakdown or arc.

The elastomer mat further comprises a heat exchange portion surrounded by the insulation portion, the heat exchange portion extending through the measuring window to the high-voltage conductor in a heat transfer direction to conduct heat energy in the heat transfer direction between the high-voltage conductor and the temperature sensor element adjacent to the heat exchange portion.

The transport of thermal energy between the three elements, i.e. the high-voltage conductor, the heat exchange portion and the temperature sensor element, depends on several factors. In particular, the thermal conductivity of the materials of the elements, the contact surfaces between the elements, the geometric arrangement of the elements, the shape and the type of heat transport must be taken into account.

The arrangement of the high-voltage conductor and the temperature sensor element on the heat exchange portion increases the contact surface between the three elements. This allows the heat energy to be transported efficiently and fast measurement feedback to be achieved.

In addition, this arrangement enables heat transport by thermal conduction, which is generally more efficient than other types of heat transport such as thermal radiation. In this way, the heat energy can be transported efficiently and rapid measurement feedback can be provided.

The heat transfer direction is defined here as the direction between the temperature sensor element and the contact surface between the heat exchange portion and the high-voltage conductor. The contact surface is bounded laterally by the contact window and is ideally aligned centrally to the contact window. The temperature sensor element is ideally arranged on a normal to the contact surface. This enables a short distance between the high-voltage conductor and the temperature sensor element. As a result, the thermal energy can be transported efficiently and fast measurement feedback can be achieved.

Further aspects for improving the first example above are described in the following examples.

According to a second example, the insulation portion of the temperature sensor according to Example 1 further comprises a heat insulation constriction, wherein a thickness of the heat insulation constriction in the heat transfer direction is smaller than a thickness of the heat exchange portion in the heat transfer direction to reduce heat conduction between the heat exchange portion and the insulation portion.

In other words, the one-piece elastomer mat is preformed, with the cross-section in the heat transfer direction at the heat transfer section being larger than at the heat insulation constriction of the insulation portion. Advantageously, the heat insulation constriction is arranged adjacent to the heat transfer section.

Heat conduction is a physical process in which thermal energy is transferred from an area of higher temperature to an area of lower temperature. This energy exchange takes place on a molecular level through collisions and movements of particles in a material. The cross-sectional area plays an important role in heat conduction. The smaller the cross-sectional area, the lower the heat flow, as there are fewer paths available for heat transport.

The heat insulation constriction reduces the cross-section of the one-piece elastomer mat at the heat insulation constriction of the insulation portion. As a result, more thermal energy can be retained in the heat exchange portion and rapid measurement feedback can be achieved.

According to a third example, the insulation portion of the temperature sensor according to any of the above examples further comprises an electrical insulation rib, wherein the electrical insulation rib protrudes from the elastomer mat and at least partially surrounds the temperature sensor element to increase a creepage distance between the temperature sensor element and the measuring window.

A rib is an elongated, raised structural element that protrudes from the surface of the elastomer mat. In particular, the insulation rib protrudes from a surface of the elastomer mat facing the lid.

The insulation rib surrounds the temperature sensor element and is therefore arranged in the circumferential direction of the heat transfer direction. As a result, the insulating rib at least increases the creepage distance between the temperature sensor element and the edge of the measuring window.

The insulation rib can completely or partially surround the temperature sensor element, e.g. in a U-shape. An only partially surrounding insulation rib can improve the contacting of the temperature sensor element.

According to a fourth example, the heat exchange portion of the temperature sensor according to any of the above examples has a contact surface, wherein the contact surface protrudes from the elastomer mat in the heat transfer direction from the measuring window of the sensor housing and/or the contact surface has a convex shape.

Contact between the heat exchange portion and the high-voltage conductor is made at the contact surface. A contact surface that protrudes beyond the edge of the measuring window on the base plate contributes to bubble-free contact between the high-voltage conductor and the heat exchange portion. As described above, this enables a more efficient transport of thermal energy and fast measurement feedback.

A convex shape refers to a geometric section in which, when two points are connected within the mold, the connecting section remains entirely within the mold. A convex shaped contact surface prevents air bubbles from remaining between the high-voltage conductor and the heat exchange portion when the temperature sensor is attached to the high-voltage conductor, as these air bubbles are pushed outwards. As described above, this enables a more efficient transport of thermal energy and fast measurement feedback.

According to a fifth example, the heat exchange portion of the temperature sensor according to any of the above examples has a sensor cavity in which the temperature sensor element is accommodated.

As described above, the temperature sensor element can be accommodated in the heat exchange portion. Since the elastomer mat is preformed, a corresponding cavity, i.e. an empty space within the heat exchange portion, can be preformed for the temperature sensor element. A sensor cavity contributes to a larger contact surface between the temperature sensor element and the heat exchange portion. As described above, this enables a more efficient transport of thermal energy and fast measurement feedback.

According to a sixth example, the heat exchange portion of the temperature sensor according to any of the above examples comprises a mounting face, wherein the mounting face faces the lid and wherein the mounting face comprises an access to receive the temperature sensor element through the access into the heat exchange portion, wherein the access preferably comprises a beveled (also referred to herein as chamfered) edge, in particular wherein the heat exchange portion comprises the sensor cavity according to the fifth example.

The temperature sensor element can be partially housed in the heat exchange portion, i.e. in an access that opens the surface of the mounting face into the heat exchange portion. The surface of the mounting face, also referred to as mounting surface, is located opposite the lid of the sensor housing. This increases the creepage and clearance distance between the temperature sensor element and the high-voltage conductor. At the same time, the distance between the temperature sensor element and the high-voltage conductor for heat conduction is reduced.

Beveled edges of the access facilitate linear integration.

It is particularly advantageous if the access leads to a sensor cavity according to the fifth example, as the advantages described above are then are synergistic.

According to a modification of the sixth example, the insulation portion of the temperature sensor according to each of the above examples has a mounting face, wherein the mounting face is opposite the lid and wherein the mounting face has a cable channel open towards the lid, in which a connection terminal of the temperature sensor element is exposed for connection to a supply line of the low-voltage network.

A cable duct is a device or structure used to organize, protect and route electrical cables or lines. A cable duct arranged on the mounting face facilitates linear integration, as the connection terminal can be easily connected to the supply line of the low-voltage network. At the same time, the arrangement on the mounting face can increase the creepage and clearance distance. Advantageously, the insulation rib described above also surrounds the cable duct.

According to a seventh example, the heat exchange portion of the temperature sensor according to any of the above examples has a mounting face, wherein the mounting face faces the lid and the mounting face has a clamping rib, wherein the clamping rib protrudes toward the lid and contacts the lid.

The elastomer mat in the heat exchange portion is elastically deformed by the contact between the lid and the clamping rib. In particular, the heat exchange portion is pressed in the direction of the measuring window. This achieves bubble-free contact between the high-voltage conductor and the heat exchange portion. As described above, this enables a more efficient transport of thermal energy and fast measurement feedback.

Use in connection with the fifth example above, the temperature sensor element arranged in the sensor cavity, is particularly advantageous, as the heat exchange portion is pressed in the direction of the temperature sensor element. Two clamping ribs in the same direction, e.g. parallel clamping ribs that press on a temperature sensor element arranged in the sensor cavity from two sides, are particularly advantageous.

The clamping rib on the mounting face reduces the thermal coupling between the lid and elastomer mat, as it is positioned away from the measuring window. It is particularly advantageous if the clamping rib is only provided in the heat exchange portion in order to reduce the thermal coupling between the lid and elastomer mat.

According to an eighth example, the heat exchange portion of the temperature sensor according to any of the above examples has a first material and the insulation portion has a second material, wherein the thermal conductivity of the first material is greater than the thermal conductivity of the second material, in particular wherein fillers are mixed in the region of the heat exchange portion.

This can increase the thermal conductivity of the heat exchange portion compared to the thermal conductivity of the insulation portion.

The thermal conductivity of an elastomer mat can be increased, for example, by adding fillers with high thermal conductivity such as graphite, aluminum oxide, and/or boron nitride.

According to a ninth example, the thermal conductivity of the elastomer mat of the temperature sensor according to any of the above examples is higher than the thermal conductivity of the base plate, preferably wherein the thermal conductivity of the elastomer mat is higher than the thermal conductivity of the lid.

This increases the thermal insulation of the housing parts compared to the elastomer mat.

According to a tenth example, the lid of the temperature sensor according to any of the above examples comprises a lid rib, wherein the lid rib extends from the lid into the chamber and at least partially surrounds the heat exchange portion, wherein a beveled flank (also referred to as chamfered flank) of the lid rib contacts the heat exchange portion to align the elastomer mat perpendicular to the heat transfer direction.

The lid rib reduces the thermal coupling between the lid and the elastomer mat, as the contact surface is located away from the measuring window. It is particularly advantageous if the lid rib touches an edge of the heat exchange portion, for example an edge of the mounting face, in order to reduce the thermal coupling between the lid and elastomer mat.

According to an eleventh example, the lid of the temperature sensor according to any of the above examples comprises a lid rib, wherein a tip of the lid rib extends from the lid into the chamber and at least partially surrounds the heat exchange portion, in particular wherein an air pocket is provided between the tip of the lid rib and the insulation portion to prevent heat conduction between the air pocket and the insulation portion.

The lid rib thus increases the clearance distance between the heat exchange portion and one edge of the insulation portion.

To prevent heat conduction between the lid and the elastomer mat, an air pocket can be provided between the insulation portion and the lid rib. This also has the advantage of increasing the installation tolerances.

According to a modification of the eleventh example, in addition to the second and third examples, the lid of the temperature sensor comprises the lid rib, which protrudes into a thermal insulation trench formed by the heat insulation constriction and at least partially surrounds the heat exchange portion. This creates a labyrinth that increases the creepage and clearance distances.

According to a twelfth example, the lid of the temperature sensor according to any of the above examples has a connecting element and the base plate of the temperature sensor according to any of the above examples has a mating connecting element for holding the lid and the base plate together in the connecting direction, the connecting direction preferably being in the heat transfer direction.

This makes assembly easier. In particular, the connection direction can be selected so that it corresponds to the heat transfer direction, which enables cost-effective linear production.

According to a modification of the twelfth example, the temperature sensor element according to each of the above examples is arranged at a measuring end of the sensor housing and the sensor housing has a strain relief for a supply line of the low-voltage network at a connector housing end opposite the measuring end.

This enables a secure connection to the supply line on the sensor housing side. This is particularly advantageous if the temperature sensor is part of a high-voltage connector.

According to a thirteenth example, the base plate of the temperature sensor according to any of the above examples has a positioning member, and the insulation portion of the elastomer mat of the temperature sensor according to any of the above examples has a counter-positioning element for aligning the elastomer mat perpendicular to the heat transfer direction.

A counter-positioning element on the insulation portion reduces the thermal coupling between the base plate and elastomer mat, as the contact surface is located away from the measuring window. It is particularly advantageous if the positioning element touches an edge of the insulation portion in order to reduce the thermal coupling between the base plate and elastomer mat.

According to a modification of the thirteenth example, an air pocket is provided between an edge of the measuring window and the heat exchange portion to prevent heat conduction between the heat exchange portion and the edge of the measuring window.

For example, one flank of the heat exchange portion that protrudes through the measuring window is beveled. This creates an insulating air pocket. This also has the advantage that the installation tolerances are increased.

A fourteenth example relates to the manufacturing method of a temperature sensor for a high-voltage conductor, the method comprising:
Provide a base plate with a measuring window for attachment to the high-voltage conductor and a lid to lid the chamber;
Providing a preformed elastomer mat having an insulation portion and a heat exchange portion, the elastomer mat being enclosed between the base plate and the lid in the chamber;
Arrangement of a temperature sensor element on the elastomer mat to measure the temperature of the high-voltage conductor and output an electrical temperature signal to a low-voltage network;
Forming a chamber in a sensor housing by connecting the base plate to the cover;
wherein the heat exchange portion is surrounded by the insulation portion to electrically insulate the temperature sensor from the high-voltage conductor, and
wherein the heat exchange portion extends through the measuring window to the high-voltage conductor in a heat transfer direction to conduct heat energy between the high-voltage conductor and the temperature sensor element adjacent to the heat exchange portion.

In order to avoid repetition, reference is made to the above examples of temperature sensors for the manufacturing process. In particular, the manufacturing method is used to manufacture a temperature sensor according to one of the above examples.

According to a fifteenth example, in the manufacturing process according to the fourteenth example, the preformed elastomer mat is provided as an injection-molded part before the base plate is joined to the lid.

This means that the elastomer mat can be preformed particularly cost-effectively, i.e. not injection molding in the base plate or the lid.

For a better understanding of the present invention, it is explained in more detail using the embodiment examples shown in the following figures. The same parts are provided with the same reference signs and the same component designations. In addition, individual features or combinations of features of the various examples shown and described can also represent independent, inventive solutions or solutions according to the invention.

The present invention will now be described with the aid of the figures.

It shows:
**Fig. 1** is an exploded view of an example of the temperature sensor;
**Fig. 2** is a second view of Fig. 1;
**Fig. 3** is a sectional view of the temperature sensor shown in Fig. 1, with the sensor assembled;
**Fig. 4** is a second sectional view of the temperature sensor shown in Fig. 1, wherein it is assembled; and
**Fig. 5** shows a high-voltage connector with a temperature sensor from the figures above.

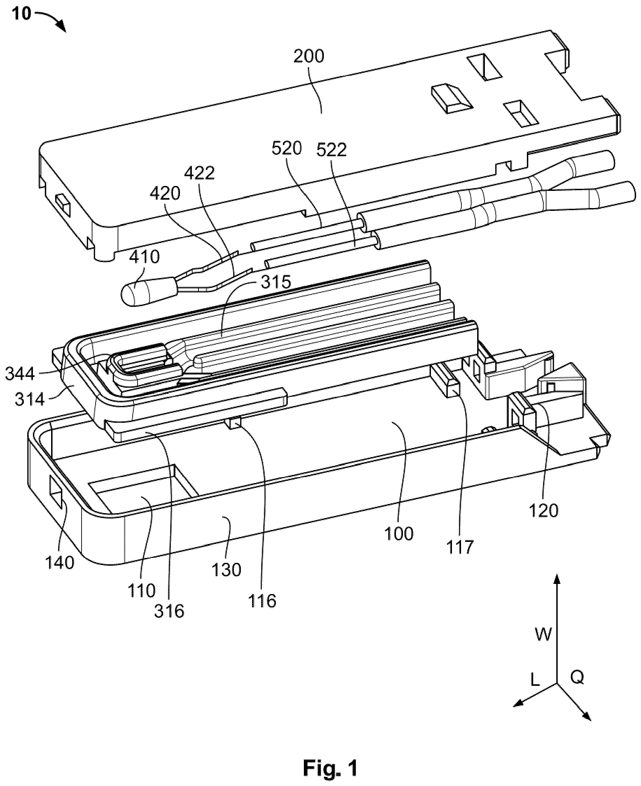

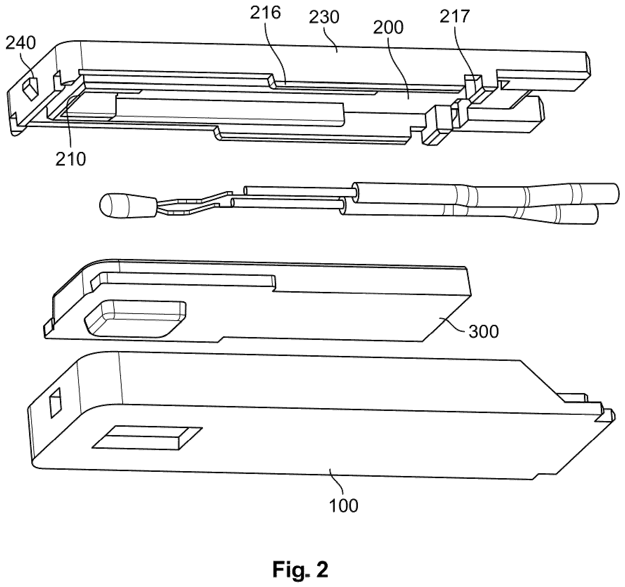

As shown in Figures 1 and 2, the temperature sensor 10 for a high-voltage conductor not shown comprises a sensor housing for forming a chamber, the sensor housing comprising a base plate 100 with a measuring window 110 for attachment to the high-voltage conductor and a lid 200 for covering the chamber.

The sensor housing extends in a longitudinal direction L from a measuring end, at which the measuring window 110 is arranged, to an opposite connector housing end, at which an opening is provided for electrical connection to a strain relief 120 for a supply line of the low-voltage network.

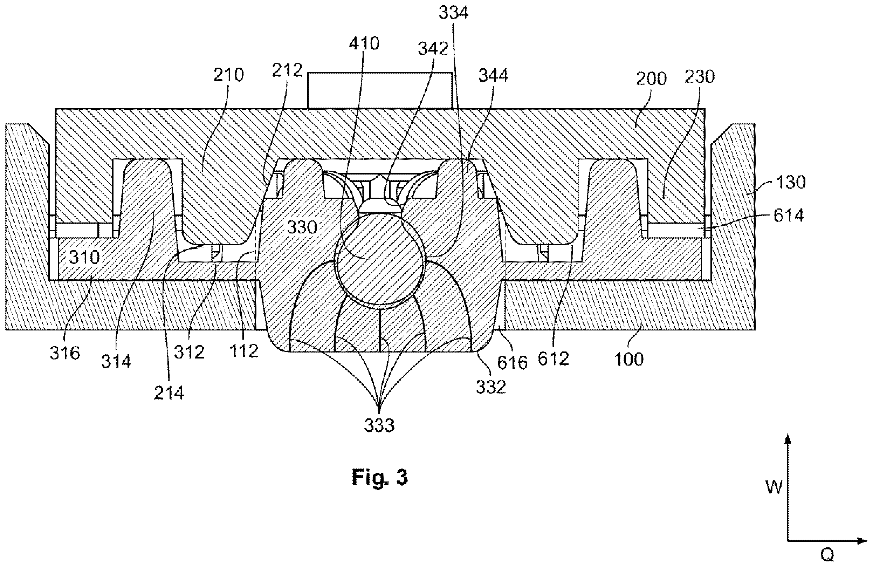

The stacking direction of the housing shown in Figures 1 to 4 extends along an axis W, which is perpendicular to the longitudinal direction L. As shown in the figures, the heat is transported along the stacking direction W from a high-voltage conductor (not shown) through the measuring window 110 to the sensor unit. In particular, Fig. 3 shows the direction of heat propagation by means of the thick lines 333.

Perpendicular to the heat transfer direction W and longitudinal direction L, the sensor housing extends in a transverse direction Q.

As shown in Figure 1, the base plate 100 has positioning elements 116, 117, the strain relief 120, a side wall 130 surrounding the measuring end, and a mating connecting element 140. The base plate 100 with the components described above can be manufactured in one piece, for example as an injection molded part.

The positioning elements 116, 117 are rib-shaped protrusions that can be connected in one piece to the base plate 100. They protrude from the base plate 100 in the direction of the axis W and can be connected to the side wall 130.

The strain relief 120 comprises protrusions that protrude from the base plate in the direction of the axis W and can be connected to it in one piece. They form cable ducts for the supply line, which extend in the longitudinal direction L and transverse direction Q.

The side wall 130 surrounds the base plate 100 and protrudes from it in the direction of the axis W. In the example shown, it surrounds three of the four edges of the rectangular base plate 100. The side walls 130 and the base plate 100 form a cup-shaped receptacle, with the strain relief 120 being arranged on the fourth edge.

Furthermore, the mating connecting element 140 is provided in the side wall 130 in the form of a through opening.

As shown in Figure 2, the lid 200 has a lid rib 210, positioning elements 216, 217, a side wall 230, and a connecting element 240. The lid 200 with the components described above can be manufactured in one piece, for example as an injection-molded part.

As shown in Fig. 3, the lid rib 210 protrudes from the lid 200 into the chamber and at least partially surrounds a heat exchange portion 330 of an elastomer mat 300 described later. Furthermore, the lid rib 210 has a beveled flank 212 and a tip 214.

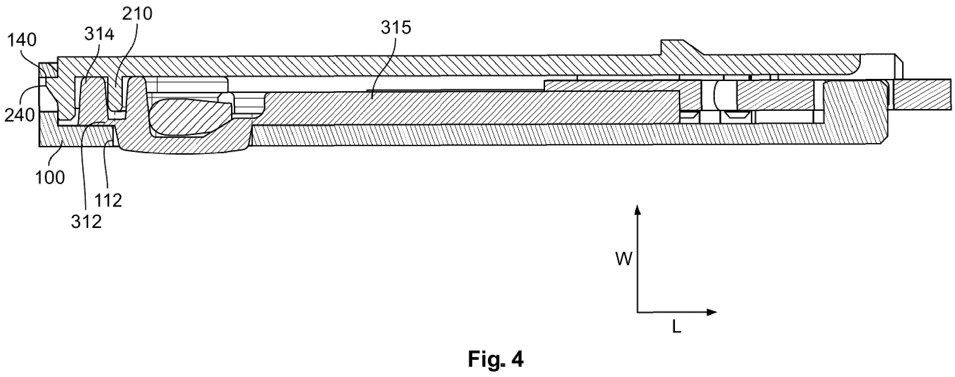

The beveled flank 212 contacts the heat exchange portion 330. As shown in Figures 3 and 4, only the parts of the lid rib 210 extending in the longitudinal direction L have the beveled flank 212. This enables alignment of the heat exchange portion 330, in particular in the transverse direction, whereby the contact surface is minimized.

As shown in Figures 3 to 4, in the assembled state, an air pocket614 is provided between a tip 214 of the lid rib 210 and an insulation portion 310 of the elastomer mat 300 described later.

The positioning elements 216, 217 are rib-shaped protrusions that can be connected to the lid 200 in one piece. They protrude from the lid 200 in the direction of the axis W and partially form the side wall 230.

The side wall 230 encloses the lid 200 and protrudes from it in the direction of the axis W. It encloses three of the four edges of the rectangular lid 200. The side walls 230 and the lid 200 form a pot-shaped receptacle, whereby the fourth wall is partially open.

Furthermore, the connecting element 240 in the form of a latching hook is provided in the side wall 230.

As shown in Fig. 4, the lid 200 and the base plate 100 are held together in the connecting direction W by the connecting element 240 and the mating connecting element 140. Here, the connecting direction corresponds to the heat transfer direction W. In particular, the side wall 230 of the lid 200 lies inside the side wall 130 of the base plate, which increases the creepage distance and the clearance distance between the high-voltage conductor and the temperature sensor element 410.

As shown in Figures 3 to 4, when assembled, an air pocket 614 is provided between the side wall 230 of the lid and the insulation portion 310 described later.

Furthermore, the temperature sensor 10 comprises a sensor unit with a temperature sensor element 410 for measuring the temperature of the high-voltage conductor and for outputting an electrical temperature signal via two connection terminals 420, 422 to mating connections 520, 522 of a low-voltage network. The mating connections 520, 522 are guided through the strain relief 120.

The temperature sensor element 410 is arranged in the chamber, namely a preformed elastomer mat 300 accommodates the temperature sensor element 410. For this purpose, the preformed elastomer mat 300 is enclosed in the chamber between the base plate 100 and the lid 200. This enables simple and cost-effective manufacture, since the temperature sensor element 410 is not molded in the elastomer mat but is placed in it.

The elastomer mat 300 shown in Figures 3 and 4 comprises an insulation portion 310 extending around the measuring window and a heat exchange portion 330. A theoretical boundary between the insulation portion 310 and the heat exchange portion 330 of the integrally formed elastomer mat 300 is indicated by the dashed line extending in extension of the edge 112 of the measuring window.

Advantageously, the thermal conductivity of the elastomer mat 300 is higher than the thermal conductivity of the base plate 100. It is particularly preferred if the thermal conductivity of the elastomer mat 300 is also higher than the thermal conductivity of the lid 200.

The insulation portion 310 of the elastomer mat 300 extends along the base plate 100, i.e. in the longitudinal direction L and transverse direction Q, whereby the temperature sensor, the temperature sensor element 410, and/or the connection terminals 420, 422, is electrically insulated from the high-voltage conductor. The air pockets 612 and 614 described above enable the insulation portion 310 and base plates not to be pressed together, but to lie loosely on top of each other. This reduces thermal coupling. In addition, installation tolerances can be increased.

The insulation portion, as shown in particular in Fig. 3, has a heat insulation constriction 312, an electrical insulation rib 314 and a counter-positioning element 316 from the heat exchange portion 330 perpendicular to the axis W. Furthermore, the insulation portion 310 has a cable duct 315 open towards the lid in the insertion direction W.

As shown in Figures 1 to 4, the heat insulation constriction 312 surrounds and adjoins the heat exchange portion 330. This reduces the heat conduction in the longitudinal direction L and transverse direction Q in the elastomer mat 300 from the heat exchange portion 330 to the insulation portion 310.

In particular, it can be seen from Figures 3 and 4 that the electrical insulation rib 314 protrudes from the elastomer mat 300 in the heat transfer direction, i.e. along the axis W, and at least partially surrounds the temperature sensor element 410. This increases a creepage distance between the temperature sensor element 410 and the edge 112 of the measuring window.

As shown in Figures 1 to 4, the counter-positioning element 316 lies against two opposite longitudinal sides of the electrical insulation rib 314. Together with the positioning element 116 of the base plate 100, it enables low-stress and simple positioning of the elastomer mat 300 in the longitudinal direction L. The counter-positioning element 316 also increases the creepage distance and the clearance distance between the temperature sensor element 410 and the edge 112 of the measuring window.

The cable duct 315 is arranged on a mounting face, with the mounting face opposing the lid 200 and the mounting face facing the lid 200. The cable duct 315 is open to the lid 200, so that the connection terminals 420, 422 of the temperature sensor element 410 are exposed to the mating connections 520, 522 of the supply line of the low-voltage network before the lid 200 is attached and can be connected easily and inexpensively during manufacture.

The heat exchange portion 330, as shown in particular in Figure 3, has a contact surface 332, a sensor cavity 334, in which the temperature sensor element 410 is accommodated, and a mounting face in the heat transfer direction W of the high-voltage conductor not shown.

The heat exchange portion 330 may comprise a first material and the insulation portion 310 may comprise a second material, wherein the thermal conductivity of the first material is advantageously greater than the thermal conductivity of the second material. Thus, the heat can be conducted more efficiently to the temperature sensor element 410.

The mounting face of the heat exchange portion 330, as shown in Figures 1 to 4, faces the lid 200. An access is provided on the mounting face, which has a beveled edge 342. Furthermore, a clamping rib 344 is provided on the mounting face.

The contact surface 334 makes contact with the high-voltage conductor not shown. As shown, for example, in Figures 1, 2 and 4, the contact surface 334 is convex in shape in at least one direction. This reduces the formation of air pockets between the heat exchange portion 330 and the high-voltage conductor and thus increases the thermal coupling between the high-voltage conductor and the temperature sensor element 410.

Furthermore, the sensor cavity 334 is arranged in the heat exchange portion 330. The sensor cavity is partially open via the access to the mounting face. In particular, the temperature sensor element 410 can be easily inserted into the preformed heat exchange portion 330 via the beveled edge 342 and is at least partially enclosed by the heat exchange portion 330. The arrangement in the sensor cavity increases the contact surface and thus increases the thermal coupling between the high-voltage conductor and the temperature sensor element 410.

The clamping rib 344 extends along the axis W from the mounting face 340 in the direction of the lid 200. In particular, the clamping rib 344 serves to deform the heat exchange portion 330 when the lid 200 is mounted with the base plate 100. In particular, the sensor cavity 334 is then pressed together, resulting in a larger contact surface between the heat exchange portion 330 and the temperature sensor 410. Furthermore, the clamping rib 344 enables the heat exchange portion to be pressed in the direction of the high-voltage conductor through the measuring window 110, thus improving the contact between the contact surface 332 of the heat exchange portion 330 and the high-voltage conductor not shown. This arrangement increases the contact force and thus increases the thermal coupling between the high-voltage conductor and the temperature sensor element 410.

Another measure for increasing thermal coupling between the high-voltage conductor and the temperature sensor element 410 and thermal insulation between the heat exchange portion 330 and the bottom element is the air pocket 616 between an edge 112 of the measuring window and the heat exchange portion 330, which also serves to increase the installation tolerances.

The above measures favor heat conduction along the thick lines 333 in the heat exchange area 330. This is essentially along the direction of the axis W.

The sensor can be assembled cost-effectively by stacking the parts. First, the base plate 100 with a measuring window 110 is provided for attachment to the high-voltage conductor.

In a next step, the preformed elastomer mat 300 with the insulation portion 310 and the heat exchange portion 330 is then incorporated into this base plate.

The temperature sensor element can already be arranged in the elastomer mat or can be arranged after the elastomer mat has been attached to the base plate.

The lid 200 is then mounted to cover the chamber so that the elastomer mat 300 is enclosed in the chamber between the base plate 100 and the lid 200.

As described above, a heat exchange portion surrounded by the insulation portion is thus formed so that the insulation portion electrically insulates the temperature sensor 410 from the high-voltage conductor, and the heat exchange portion extends through the measuring window to the high-voltage conductor in a heat transfer direction to conduct heat energy between the high-voltage conductor and the temperature sensor element adjacent to the heat exchange portion.

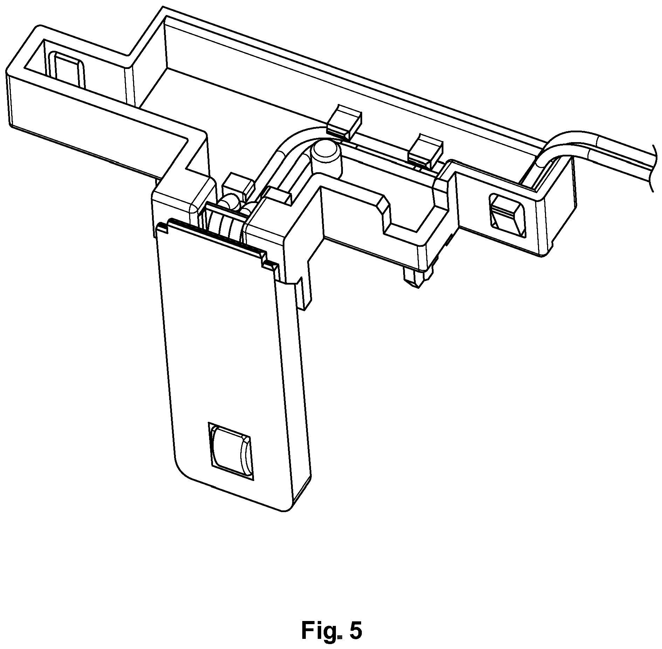

Finally, Fig. 5 shows the connection of the temperature sensor to a high-voltage header.

For example, the preformed elastomer mat can be provided as an injection-molded part before the base plate is connected to the lid.

Even if not shown in the figures, the sensor housing can have a different shape and does not necessarily have to have a rectangular basic shape. The same applies to the measuring window.

### List of reference symbols:

| **Reference number** | **Description** |
|---|---|
| 10 | Temperature sensor |
| 100 | Base plate |
| 110 | Measuring window |
| 112 | Edge of the measuring window |
| 116, 117, 216, 217 | Positioning element |
| 120 | Strain relief |
| 130, 230 | Side wall |
| 140 | Mating connecting element |
| 200 | Lid |
| 210 | Lid rib |
| 212 | Beveled flank |
| 214 | tip |
| 230 | Side wall |
| 240 | Connecting element |
| 300 | Elastomer mat |
| 310 | Insulation portion |
| 312 | heat insulation constriction |
| 314 | Electrical insulation rib |
| 314 | Cable duct |
| 316 | Counter-positioning element |
| 330 | Heat exchange portion |
| 332 | Contact surface |
| 333 | Heatutsch |
| 334 | Sensor cavity |
| 410 | Temperature sensor element |
| 420, 422 | Connection terminals |
| 520, 522 | Mating connections |
| 612, 614, 616 | Air pocket |
| W | Heat transfer direction and stacking direction |
| L | Longitudinal direction |
| Q | Transverse direction |

## Claims

1. Temperature sensor (10) for a high-voltage conductor, comprising the temperature sensor (10):
a sensor housing for forming a chamber, the sensor housing having a base plate (100) with a measuring window (110) for attachment to the high-voltage conductor and a lid (200) for covering the chamber;
a temperature sensor element (410) for measuring the temperature of the high-voltage conductor and for outputting an electrical temperature signal to a low-voltage network, wherein the temperature sensor element (410) is arranged in the chamber;
a preformed elastomer mat (300) enclosed in the chamber between the base plate (100) and the lid (200),
wherein the elastomer mat (300) has an insulation portion (310) extending around the measuring window (110) to electrically insulate the temperature sensor from the high-voltage conductor, and
wherein the elastomer mat (300) further comprises a heat exchange portion (330) surrounded by the insulation portion (310), the heat exchange portion (330) extending through the measuring window (110) to the high-voltage conductor in a heat transfer direction (W) to conduct heat energy in the heat transfer direction (W) between the high-voltage conductor and the temperature sensor element (410) adjacent to the heat exchange portion.

2. Temperature sensor (10) according to claim 1, wherein the insulation portion (310) further comprises a heat insulation constriction (312), wherein a thickness of the heat insulation constriction (312) in the heat transfer direction (W) is smaller than a thickness of the heat exchange portion (330) in the heat transfer direction (W) to reduce heat conduction between the heat exchange portion (330) and the insulation portion (310).

3. Temperature sensor (10) according to any one of the preceding claims, wherein the insulation portion (310) further comprises an electrical insulation rib (314), wherein the electrical insulation rib (314) protrudes from the elastomer mat (300) and at least partially surrounds the temperature sensor element (410) to increase a creepage distance between the temperature sensor element (410) and the measuring window (110).

4. Temperature sensor (10) according to one of the preceding claims, wherein the heat exchange portion (330) comprises a contact surface (332), wherein the contact surface (332) protrudes from the elastomer mat (300) against the heat transfer direction (W) out of the measuring window (110) of the sensor housing, in particular wherein the contact surface (332) has a convex shape.

5. Temperature sensor (10) according to any one of the preceding claims, wherein the heat exchange portion (330) comprises a sensor cavity (334) in which the temperature sensor element (410) is accommodated.

6. Temperature sensor (10) according to any one of the preceding claims, wherein the heat exchange portion (330) comprises a mounting face, wherein the mounting face faces the lid (200), and wherein the mounting face (340) comprises an access to receive the temperature sensor element (410) through the access into the heat exchange portion (330), wherein the access preferably comprises a beveled edge (342), in particular wherein the heat exchange portion (330) comprises the sensor cavity (334) according to claim 5; and/or
wherein the insulation portion (310) has a mounting face, wherein the mounting face is opposite the lid (200) and wherein the mounting face has a cable duct (315) which is open towards the lid (200) and in which a connection terminal (420, 422) of the temperature sensor element (410) is exposed for connection to a supply line of the low-voltage network.

7. Temperature sensor (10) according to one of the preceding claims, wherein the heat exchange portion (330) comprises a mounting face, wherein the mounting face faces the lid (200) and the mounting face (340) comprises a clamping rib (344), wherein the clamping rib (344) protrudes towards the lid (200) and contacts the lid (200).

8. Temperature sensor (10) according to one of the preceding claims, wherein the heat exchange portion (330) comprises a first material and the insulation portion (310) comprises a second material, wherein the thermal conductivity of the first material is greater than the thermal conductivity of the second material, in particular wherein fillers are admixed in the region of the heat exchange portion (330).

9. Temperature sensor (10) according to one of the preceding claims, wherein the thermal conductivity of the elastomer mat (300) is higher than the thermal conductivity of the base plate (100), preferably wherein the thermal conductivity of the elastomer mat (300) is higher than the thermal conductivity of the lid (200).

10. Temperature sensor (10) according to any one of the preceding claims, wherein the lid (200) comprises a lid rib (210), wherein the lid rib (210) extends from the lid (200) into the chamber and at least partially surrounds the heat exchange portion (330), wherein a beveled flank (212) of the lid rib (210) contacts the heat exchange portion (330) to align the elastomer mat perpendicular to the heat transfer direction.

11. Temperature sensor (10) according to any one of the preceding claims, wherein the lid comprises a lid rib, wherein a tip (214) of the lid rib (210) projects from the lid (200) into the chamber and at least partially surrounds the heat exchange portion (330), in particular wherein an air pocket (612) is provided between the tip (214) of the lid rib (210) and the insulation portion (310) to prevent heat conduction between the tip (214) and the insulation portion (310).

12. Temperature sensor (10) according to one of the preceding claims, wherein the lid (200) comprises one or more connecting elements (240) and the base plate (100) comprises one or more mating connecting elements (140) for holding the lid (200) and the base plate (100) together in the connecting direction (W), wherein the connecting direction (W) preferably extends in the heat transfer direction (W),
and/or
wherein the temperature sensor element (410) is arranged at a measuring end of the sensor housing and the sensor housing has a strain relief (120) for a supply line of the low-voltage network at a connector housing end opposite the measuring end.

13. Temperature sensor (10) according to one of the preceding claims, wherein the base plate (100) comprises a positioning element (116, 117) and the insulation portion (310) of the elastomer mat (300) comprises a counter-positioning element (316) for aligning the elastomer mat (300) perpendicular to the heat transfer direction, and/or wherein an air pocket (616) is provided between an edge (112) of the measuring window (110) and the heat exchange portion (330) to prevent heat conduction between the heat exchange portion (330) and the edge (112) of the measuring window (110).

14. A method of manufacturing a temperature sensor (10) for a high-voltage conductor, the method comprising:
Providing a base plate (100) with a measuring window (110) for attachment to the high-voltage conductor and a lid (200) for covering the chamber;
Providing a preformed elastomer mat (300) having an insulation portion (310) and a heat exchange portion (330), wherein the elastomer mat (300) is enclosed between the base plate (100) and the lid (200) in the chamber;
Arranging a temperature sensor element (410) on the elastomer mat (300) to measure the temperature of the high-voltage conductor and output an electrical temperature signal to a low-voltage network;
Forming a chamber in a sensor housing by connecting the base plate (100) to the lid (200);
wherein the heat exchange portion (330) is surrounded by the insulation portion (310) so that the insulation portion (310) electrically insulates the temperature sensor from the high-voltage conductor, and
wherein the heat exchange portion (330) extends through the measuring window (110) to the high-voltage conductor in a heat transfer direction (W) to conduct heat energy between the high-voltage conductor and the temperature sensor element (410) adjacent to the heat exchange portion (330).

15. Manufacturing method of the temperature sensor (10) for a high-voltage conductor according to claim 14, wherein the preformed elastomer mat (300) is provided as an injection-molded part before the base plate (100) is connected to the lid (200).
